# EUROPÄISCHE PATENTSCHRIFT

(11) **EP 1 889 129 B1**
(45) Veröffentlichungstag und Bekanntmachung des Hinweises auf die Patenterteilung: **03.10.2012**
(21) Anmeldenummer: 06754827.1
(22) Anmeldetag: 25.04.2006
(51) Int. Cl.: B29C 45/76, G05B 19/42, G05B 19/4093

(54) **VERFAHREN ZUR ABLAUFPROGRAMMIERUNG EINES SPRITZGIESSZYKLUS EINER SPRITZGIESSMASCHINE**
METHOD FOR THE SEQUENTIAL PROGRAMMING OF AN INJECTION MOLDING CYCLE OF AN INJECTION MOLDING MACHINE
PROCEDE POUR LA PROGRAMMATION SEQUENTIELLE D'UN CYCLE D'INJECTION D'UNE MACHINE A INJECTION

(30) Priorität: 24.05.2005 DE 102005023919
(43) Veröffentlichungstag der Anmeldung: 20.02.2008
(73) Patentinhaber: KraussMaffei Technologies GmbH, 80997 München (DE)
(72) Erfinder: GRIMM, Günther, 86567 Hilgertshausen (DE); BETSCHE, Markus, 83026 Rosenheim (DE); HUNOLD, Dietrich, 51709 Marienheide (DE)
(74) Vertreter: Wilhelm, Ludwig
(86) Internationale Anmeldenummer: PCT/EP2006/061800
(87) Internationale Veröffentlichungsnummer: WO 2006/125706

(56) Entgegenhaltungen:
- EP-A- 0 792 726
- EP-A- 0 875 353
- EP-A- 1 048 995
- DE-A1- 19 900 117
- US-A- 4 224 501
- US-A- 4 696 632

## Beschreibung

Die Erfindung betrifft ein Verfahren zur Ablaufprogrammierung eines Spritzgießzyklus einer Spritzgießmaschine gemäß dem Oberbegriff von Anspruch 1.

Aus dem Stand der Technik ist es bekannt, die Programmierung eines Spritzgießzyklus einer Spritzgießmaschine, also den Betrieb einer Spritzgießmaschine, mittels einer frei programmierbaren Steuerung (SPS) an der Spritzgießmaschine selbst (online) oder losgelöst von der Spritzgießmaschine an einem separaten Terminal (offline) vorzunehmen. Bei der online-Programmierung steht die Spritzgießmaschine über einen größeren Zeitraum nicht für die Produktion zur Verfügung. Bei der offline-Programmierung ist in der Regel nur ein kurzer Stillstand der Spritzgießmaschine zu verzeichnen, um letzte Feinabstimmungen bei der Programmierung vorzunehmen.

Bei solchen frei programmierbaren Steuerungen handelt es sich in der Regel um Datenverarbeitungsprogramme zum Einrichten und Betreiben einer Spritzgießmaschine. Jeder Hersteller einer Spritzgießmaschine bietet in der Regel eine auf sein Maschinenprogramm zugeschnittene frei programmierbare Steuerung an. Bei diesen Steuerungen ist der Ablauf eines Spritzgießzyklus jedoch nicht veränderbar bzw. nur unter Zuhilfenahme des Maschinenherstellers. Der Anwender bzw. Verarbeiter kann eine Programmierung nicht vornehmen.

Weiterentwicklungen hierzu sind frei programmierbare Ablaufsteuerungen. Hierbei werden dem Verarbeiter bzw. Anwender in der Steuerung Werkzeuge zur Verfügung gestellt, mit denen er den Ablauf eines Spritzgießzyklus aus vorgegebenen Elementen (Makros) zusammenstellen kann. Solche frei programmierbaren Ablaufsteuerungen sind in der Zeitschrift "Kunststoffe", Ausgabe 08/2003, Seiten 46 - 49, beschrieben.

Ein Verarbeiter, der Spritzgießmaschinen verschiedener Hersteller im Einsatz hat, muss sich mit unterschiedlichen frei programmierbaren Ablaufsteuerungen auskennen, um alle Verfahrensabläufe und Bewegungen, die für die Herstellung eines bestimmten Produkts erforderlich sind, richtig programmieren zu können.

Bereits eine frei programmierbare Ablaufsteuerung eines einzigen Herstellers ist nicht leicht zu beherrschen; und wenn sich eine Person nicht regelmäßig mit dem Programm beschäftigt, und erst nach einer längeren Zeit ein neuer Ablauf programmiert werden muss (weil z.B. ein anderes Produkt hergestellt werden soll), muss sich erneut in dieses Programm eingearbeitet werden, was mit nicht unerheblichem Zeitaufwand verbunden ist. Ungleich schwieriger ist die Situation, wenn Spritzgießmaschinen verschiedener Hersteller programmiert werden müssen und somit verschiedene frei programmierbare Ablaufsteuerungen beherrscht werden sollen.

Eine gewisse Hilfestellung bei der Programmierung eines Ablaufs einer Spritzgießmaschine bieten Ablaufdiagramme von Werkzeugherstellern. In solchen Ablaufdiagrammen ist detailliert beschrieben und dargestellt, wann welches Teil eines Werkzeugs welche Bewegung machen muss, damit am Ende das Formteil richtig hergestellt worden ist und fehlerfrei aus dem Werkzeug entnommen werden kann. Allerdings müssen auch diese Ablaufdiagramme noch in die frei programmierbare Steuerung (SPS) eingegeben oder in die "richtige" Ablaufprogrammierung umgesetzt werden, was gewisse Kenntnisse über diese Steuerungen voraussetzt. Im übrigen sind nicht zu jedem Werkzeug solche Ablaufdiagramme verfügbar. Darüber hinaus können Fehler auftreten, wenn Angaben von Positionen wie "vorgefahren" und "zurückgefahren" oder "eingefahren" und "ausgefahren" nicht eindeutig sind. Dabei ist zu berücksichtigen, dass das Bedienpersonal häufig nicht über Fachkenntnisse zu den Spritzgießmaschinen oder Werkzeugen verfügt.

Das grundsätzliche Problem aller frei programmierbaren Steuerungen (SPS) sowie der zuvor genannten frei programmierbaren Ablaufsteuerungen besteht darin, dass zunächst der gesamte Spritzgießzyklus in die Steuerung eingegeben wird und dann als Ganzes abgefahren wird, ohne den Zyklus oder einzelne Abschnitte davon gefahrlos testen zu können. Fehler ziehen aber in vielen Fällen schwerwiegende Werkzeugschäden nach sich.

Um das Programmieren von Maschinen zu vereinfachen, sind sogenannte "Teach-in-Systeme" bekannt. Hierbei handelt es sich um Hilfsmittel, die die Programmierung von komplizierten Maschinen erleichtern sollen und in der Regel keine Programmierkenntnisse oder Kenntnisse über die Steuerung der Maschine voraussetzen. Aus der DE 199 00 117 A1 ist ein Teach-In-System zur Programmierung von Schleifmaschinen oder anderweitigen Werkzeugmaschinen bekannt. Dieses Teach-In-System verfügt über eine grafische Benutzeroberfläche zur visuellen Darstellung von Rohlingen, Werkstücken und Werkzeugen. Die dargestellten Elemente sind durch entsprechende Bedienelemente willkürlich in Bezug aufeinander verschiebbar. Die sich ergebenen Verschiebungen werden von dem Teach-In-Modul aufgezeichnet und in ein Maschinensteuerprogramm übersetzt oder es wird ein vorhandenes Maschinensteuerprogramm anhand der Verschiebungen verändert. Es handelt sich um ein sogenanntes virtuelles Teach-In-System. Aus der EP 1 048 995 A2 ist ein virtuelles Teach-System für einen Formteilentnahme-Roboter bekannt.

Auf dem Gebiet von programmgesteuerten Industrierobotern sind weitere Teach-In-Verfahren und Teach-In-Systeme bekannt, um der Steuerung des Roboters die Bewegung eines Manipulatorarms in Bezug auf ein Werkstück zu lehren (Teachen des Roboters). Hierbei wird von Hand die gewünschte Bewegung des Roboters in ein Eingabegerät eingegeben, und zwar numerisch oder graphisch. Ein Datenverarbeitungsprogramm wandelt diese Eingabewerte in ein "Bewegungsprogramm" für den Industrieroboter um, d.h. der Bewegungsablauf wird automatisch programmiert. Teach-In-Systeme für Industrieroboter sind beispielsweise aus EP 0 792 726 B1 und US 4,224,501 bekannt.

Aus der US 4,696,632 ist es bekannt, zwei Positionen einer beweglichen Formhälfte einer Spritzgieβmaschine zu teachen.

Ausgehend hiervon liegt der Erfindung die Aufgabe zugrunde, ein Verfahren anzugeben, mit dem die Ablaufprogrammierung eines Spritzgießzyklus einer Spritzgießmaschine vereinfacht wird und das unabhängig von herstellerspezifischen Programmen und somit universell bei jeder Spritzgießmaschine einsetzbar ist.

Die Lösung dieser Aufgabe erfolgt durch ein Verfahren mit den Merkmalen von Anspruch 1. Vorteilhafte Ausgestaltungen und Weiterentwicklungen finden sich in den Unteransprüchen.

Dadurch dass der Spritzgießzyklus Schritt für Schritt von Hand abgefahren wird und die Bedienperson bei der Programmierung sieht, wohin die Maschinenteile und/oder Werkzeugteile wie zum Beispiel Kerne bewegt werden, ist es unerheblich, wie die jeweils angefahrene Position bzw. der angefahrene Zustand genannt werden. Damit werden Fehler vermieden, wie sie bei frei aber händisch programmierbaren Steuerungen auftreten können, wenn Begriffe wie "eingefahren" und "ausgefahren" missverstanden werden und nach Ende der vollständigen Programmierung der ganze Bewegungsablauf auf einmal abgefahren wird. Außerdem kann eine Bedienperson ohne tiefgehende Kenntnisse der Steuerung auch komplizierte Abläufe realisieren; man muss lediglich den Ablauf der Werkzeugteile kennen. Das Verfahren hat den weiteren Vorteil, dass Fehler erkannt werden können, solange sie noch nicht kritisch sind.

Wenn das Teach-In im Einrichtmodus erfolgt, sind die auftretenden Kräfte bei der Bewegung der Maschinen- und/oder Werkzeugteile drastisch reduziert, so dass bei eventuell auftretenden Fehlern keine oder nur geringe Schäden entstehen können.

Wenn das Teach-In abgeschlossen ist, kann eine Optimierung des Bewegungsablaufs vorgenommen werden, indem die Bedienperson den Spritzgießzyklus einmal automatisch ablaufen lässt und anschließend Veränderungen in den zu optimierenden Parametern vornimmt. Beispielsweise könnte eine Verfahrbewegung der Auswerfers oder eines Kernzugs schneller ausgeführt werden, wozu beispielsweise bei hydraulischen Spritzgießmaschinen die Ölmenge entsprechend zu erhöhen ist.

Bedarfsweise können Teile des Spritzgießzyklus durch klassische Programmierung editiert werden und das Teach-In sich auf bestimmte Funktionsblöcke beschränken, beispielsweise auf die Betätigung von Kernzügen.

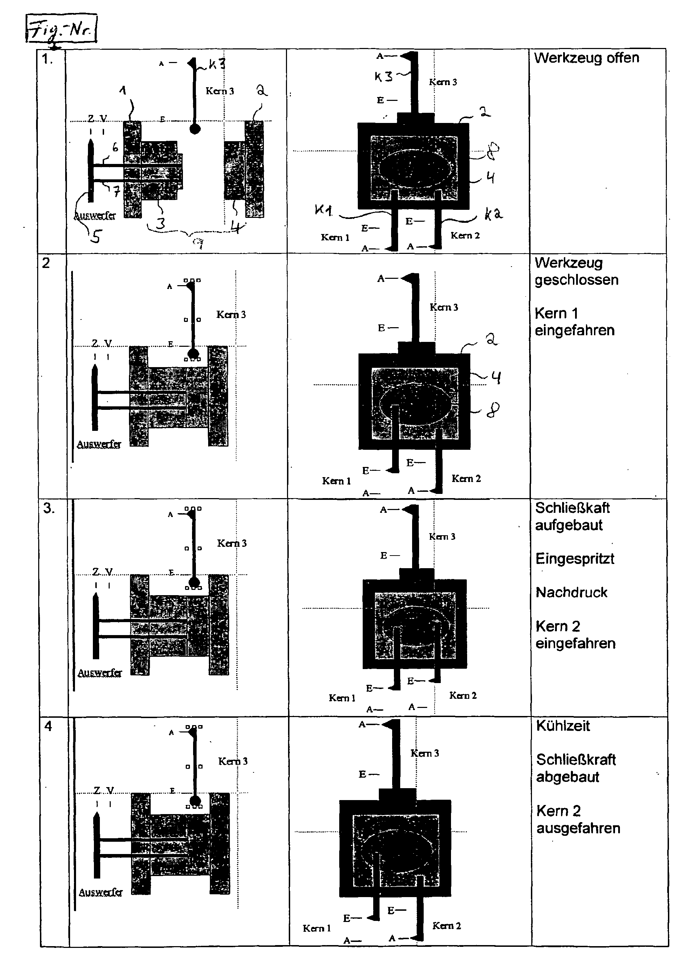

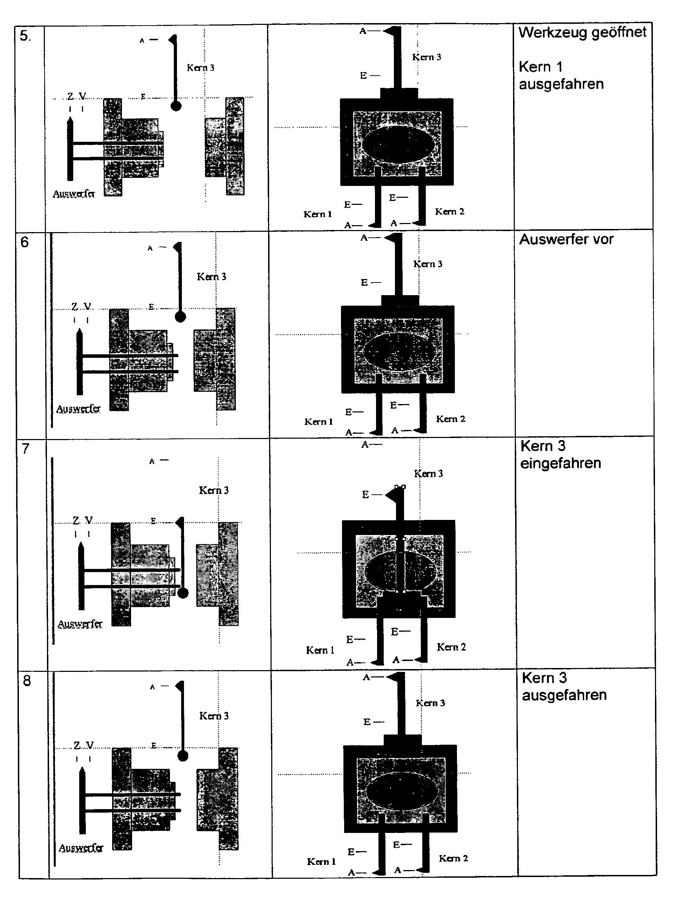

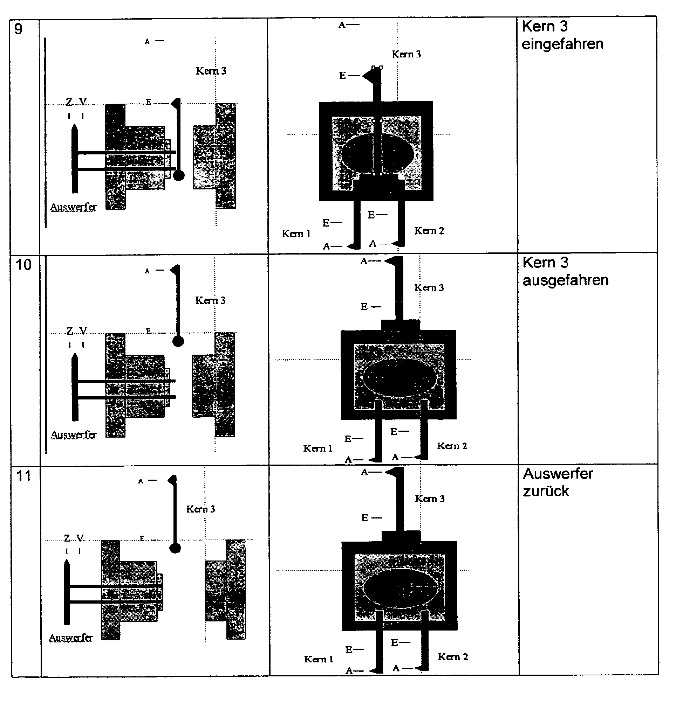

Nachfolgend soll die Erfindung anhand eines Ausführungsbeispiels und unter Bezugnahme auf die Figuren 1 bis 12 sowie die Tabelle 1 näher beschrieben werden.

In den Figuren sind schematisch eine bewegliche und eine feststehende Werkzeugaufspannplatte 1 und 2 mit Hälften 3 (beweglich) und 4 (feststehend) eines Spritzgießwerkzeugs 9 einer an sich bekannten und daher nicht näher gezeigten Spritzgießmaschine dargestellt. An der beweglichen Werkzeugaufspannplatte 1 ist eine Auswerferplatte 5 mit zwei Auswerferstangen 6 und 7 angeordnet, die zwischen einer zurückgezogenen Position z und einer vorgefahrenen Position v hin- und her verfahren werden kann. Des weiteren sind drei Kernzüge K1, K2 und K3 vorgesehen, die zu unterschiedlichen Zeiten des Spritzgießzyklus in eine Kavität 8 oder zwischen die Hälften 3 und 4 des Spritzgießwerkzeugs 9 ein- und ausgefahren werden können. Die ausgefahrene Position ist vorliegend mit A und die eingefahrene Position mit E bezeichnet. In dem hier vorliegenden Beispiel ist eine Kavität 8 in der feststehenden Hälfte 4 des Spritzgießwerkzeugs 9 ausgebildet. Die jeweils linke Darstellung entspricht einem Längsschnitts durch die Schließeinheit der Spritzgießmaschine und die jeweils rechte Darstellung ist eine Aufsicht auf die feststehende Werkzeughälfte 4 aus Richtung des Pfeils P in Figur 1.

Das Teach-In der Spritzgießmaschine und damit die Ablaufprogrammierung des Spritzgießzyklus erfolgt wie nachfolgend näher beschrieben. Vorzugsweise wird zunächst von der Bedienperson der Einrichtmodus der Maschinensteuerung ausgewählt, bei dem die Maschinen- und/oder Werkzeugteile mit reduzierten Kräften (bei hydraulischen Spritzgießmaschinen also mit reduzierten Hydraulikdrücken) betätigt werden. Sodann startet die Bedienperson den Teach-In-Modus und fährt manuell den nachfolgend als Beispiel beschriebenen Spritzgießzyklus ab. Dies kann mittels Handbedientasten für Bewegungen (Ein/Aus bzw. Vor/Zurück) erfolgen, und zwar entweder direkt am Bedienterminal der Steuerung der Spritzgießmaschine oder über ein separates Bediengerät, das mit dem Bedienterminal der Steuerung über Kabel verbunden ist; möglich ist auch eine kabellose Datenübertragung von dem separaten Bediengerät zu der Steuerung der Spritzgießmaschine. Die Speicherung der ausgeführten Aktionen sowie der angefahrenen Positionen bzw. Zustände erfolgt durch Betätigung einer "Speichern"-Taste durch die Bedienperson. Figur 12 zeigt schematisch eine Bediengerät 11, das über eine Leitung 12 mit der Maschinensteuerung 13 verbunden ist. Das Bediengerät 11 weist drei Schalter für die Betätigung der Kerne K1, K2 und K3 auf, einen Schalter zum Auf und Zufahren der Werkzeughälften, einen Schalter zum Vor- und Zurückbewegen des Auswerfers sowie eine "ENTER"-Taste zum Speichern.

Der Bewegungsablauf soll anhand der Figuren 1 bis 11 erläutert werden. In der Tabelle 1 sind die jeder Figur entsprechenden Aktionen und Zustände der hier relevanten Teile angegeben. Diese Tabelle 1 "entspricht" der gespeicherten Ablaufprogrammierung. Der besseren Übersicht halber sind nur die auf die Kerne, die Werkzeughälften und den Auswerfer bezogenen Aktionen und Zustände im Einzelnen angegeben. Weitere vor- oder nachgelagerte Aktionen und Zustände sind in Klammem angegeben und können gegebenenfalls direkt in die Maschinensteuerung eingegeben werden. Ebenso können Verfahrensparameter wie z.B. Verfahrgeschwindigkeiten, Wartezeiten, Überwachungszeiten, Drücke und dergleichen unmittelbar oder auf Abfrage beim Teachen des Ablaufs in die Maschinensteuerung eingegeben werden.
Figur 1
   Ausgegangen wird von einer Situation, in der das Spritzgießwerkzeug 9 geöffnet ist und in der der Auswerfer 5 sich in der zurückgefahrenen Position z sowie alle Kernzüge K1, K2 und K3 sich in der ausgefahrenen Position A befinden. Diese Positionen bzw. Zustände werden in der Steuerung der Spritzgießmaschine als Ausgangspositionen gespeichert.
Figur 2
   Das Spritzgießwerkzeug 9 wird zugefahren und der Kern K1 wird in die Kavität 8 eingefahren, um einen Hinterschnitt zu formen. Die erreichten Positionen bzw. Zustände werden dann in der Steuerung gespeichert.
Figur 3
   Es wird Schließkraft aufgebaut, Kunststoffschmelze in die Kavität 8 eingespritzt und Nachdruck aufrechterhalten. Mit Beginn der Nachdruckphase wird der Kern 2 eingefahren (K2 in Position E), um eine Kernprägefunktion zu realisieren. Der Zeitpunkt des Einfahrens sowie das Erreichen des eingefahrenen Zustands werden gespeichert. Danach beginnt die Kühlzeit zu laufen.
Figur 4
   Nach Ablauf der Kühlzeit wird die Schließkraft abgebaut, der Kern 2 wieder ausgefahren (K2 in Position A) und das Erreichen dieser ausgefahrenen Position von K2 gespeichert.
Figur 5
   Die bewegliche Werkzeugaufspannplatte 1 und mit ihr die bewegliche Hälfte 3 des Spritzgießwerkzeugs 9 werden von der feststehenden Werkzeugaufspannplatte 2 wegbewegt und das Spritzgießwerkzeug 9 geöffnet. Anschließend wird der Kern K1 ausgefahren (K1 in Position A) und das Erreichen dieser Position von K1 gespeichert.
Figur 6
   Nachfolgend wird die Auswerferplatte 5 vorgefahren und die Position v gespeichert.
Figuren 7 bis 10
   Bei vorgefahrener Auswerferplatte 5 wird der Kern K3 zweimal ein- und ausgefahren, um das fertige Formteil von den Auswerferstangen 6 und 7 abzustreifen. Die jeweiligen Positionen bzw. Zustände des Kerns K3 werden dabei in der Steuerung gespeichert.
Figur 11
   Anschließend wird die Auswerferplatte 5 zurückgefahren in Position z.

Nun ist die Ausgangssituation gemäß Figur 1 wieder erreicht, d.h. der gesamte Spritzgießzyklus ist einmal von Hand abgefahren worden und der Bewegungsablauf in der Maschinensteuerung gespeichert worden.

Die Geschwindigkeit, mit der die Bewegungen der Maschinenteile und/oder der Werkzeugteile ausgeführt werden und die Zeitpunkte, zu denen die Positionen der Maschinenteile und/oder der Werkzeugteile angefahren werden sollen, können schon während des Einrichtens eingegeben und nachfolgend von der Bedienperson verändert werden. Es können auch Hilfsprogramme vorgesehen werden, um der Bedienperson die Optimierung des Bewegungsablaufs zu erleichtern.

Neben den hier beschriebenen Maschinenteilen können auch die Maschinenteile der Einspritzeinheit sowie Peripheriegeräte in den Teach-In-Modus miteinbezogen werden, je nachdem welcher Spritzgießzyklus der Steuerung der Spritzgießmaschine gelehrt werden soll.

### Bezugszeichenliste

- 1: Bewegliche Werkzeugaufspannplatte
- 2: Feststehende Werkzeugaufspannplatte
- 3: Bewegliche Werkzeughälfte
- 4: Feststehende Werkzeughälfte
- 5: Auswerferplatte
- 6: Auswerferstange
- 7: Auswerferstange
- 8: Kavität
- 9: Spritzgießwerkzeug
- 10: Patrize
- 11: Bediengerät
- 12: Verbindungsleitung
- 13: Maschinensteuerung

**TABELLE 1**

| | | |
|---|---|---|
| K=Kern, A=ausgefahren, E=eingefahren, Formposition=Position der beweglichen Werkzeughälfte und Auswerferposition in [mm] gemäß einem zugeordneten Wegmesssystem | | |

| **Schritt (Figur)** | **Aktion** | **Zustand** |
|---|---|---|
| 1 | Anfang | Formposition 360mm, Auswerferposition 10mm, K1 A, K2 A, K3 A |
| 2 | Form schließen, Kern 1 einfahren | Formposition 0 mm, Auswerferposition 10mm, K1 E, K2 A, K3 A |
| 3 | (Schließkraftaufbau, Einspritzen, Nachdruck) Kern 2 einfahren | Formposition 0 mm, Auswerferposition 10mm, K1 E, K2 E, K3 A |
| 4 | (Kühlen, Schließkraftabbau) Kern 2 ausfahren | Formposition 0 mm, Auswerferposition 10mm, K1 E, K2 A, K3 A |
| 5 | Werkzeug öffnen und Kern 1 ausfahren | Formposition 360mm, Auswerferposition 10mm, K1 A, K2 A, K3 A |
| 6 | Auswerfer vor | Formposition 360mm, Auswerferposition 90mm, K1 A, K2 A, K3 A |
| 7 | Kern 3 einfahren | Formposition 360mm, Auswerferposition 90mm, K1 A, K2 A, K3 E |
| 8 | Kern 3 ausfahren | Formposition 360mm, Auswerferposition 90mm, K1 A, K2 A, K3 A |
| 9 | Kern 3 einfahren | Formposition 360mm, Auswerferposition 90mm, K1 A, K2 A, K3 E |
| 10 | Kern 3 ausfahren | Formposition 360mm, Auswerferposition 90mm, K1 A, K2 A, K3 A |
| 11 | Auswerfer zurückfahren | Formposition 360mm, Auswerferposition 10mm, K1 A, K2 A, K3 A |
| 12 | Ende | Formposition 360mm, Auswerferposition 10mm, K1 A, K2 A, K3 A |

## Patentansprüche

1. Verfahren zur Ablaufprogrammierung eines Spritzgießzyklus einer Spritzgießmaschine mit einem oder mehreren Spritzgießwerkzeugen (9),
**dadurch gekennzeichnet,**
**dass** der Spritzgießzyklus von Hand abgefahren wird, wobei die Maschinenteile der Spritzgießmaschine und/oder die Werkzeugteile (3, 4, 5, 6, 7, K1, K2, K3) des oder der Spritzgießwerkzeuge (9) manuell in der für diesen Spritzgießzyklus erforderlichen Reihenfolge in ihre für diesen Spritzgießzyklus erforderliche Positionen gefahren und Aktionen, nämlich Schliesskraftaufbau, Einspritzen, Nachdruck oder Kühlen ausgeführt werden, wobei dieser Bewegungsablauf der Maschinenteile und/oder der Werkzeugteile (3, 4, 5, 6, 7, K1, K2, K3) in einer Steuerung (13) gespeichert wird, wobei sowohl die Positionen als auch die Aktionen gespeichert werden.

2. Verfahren nach Anspruch 1,
**dadurch gekennzeichnet,**
**dass** die Programmierung im Einrichtmodus der Spritzgießmaschine vorgenommen wird.

3. Verfahren nach Anspruch 1 oder 2,
**dadurch gekennzeichnet,**
**dass** nur Teile des Spritzgießzyklus abgefahren werden, beispielsweise die Bewegung eines Auswerfers (6, 7, 8) und/oder von Kernzügen (K1, K2, K3) des Spritzgießwerkzeugs (9).

4. Verfahren nach einem der Ansprüche 1 bis 3,
**dadurch gekennzeichnet,**
**dass** Peripheriegeräte vorgesehen sind, beispielsweise Roboter, die in den Spritzgießzyklus miteinbezogen werden, wobei deren Bewegung ebenfalls von Hand abgefahren und dieser Bewegungsablauf in der Steuerung (13) gespeichert wird.

5. Verfahren nach einem der Ansprüche 1 bis 4,
**dadurch gekennzeichnet,**
**dass** der aufgezeichnete Spritzgießzyklus nachfolgend mehrmals automatisch ausgeführt wird und die Bewegung der Maschinenteile und/oder der Werkzeugteile (3, 4, 5, 6, 7, K1, K2, K3) durch Eingabe von Parametern in die Steuerung (13) optimiert wird.

## Claims

1. A method for the sequence programming of an injection moulding cycle of an injection moulding machine with one or more injection moulds (9),
**characterized in that**
the injection moulding cycle is started manually, wherein the machine parts of the injection moulding machine and/or the mould parts (3, 4, 5, 6, 7, K1, K2, K3) of the injection mould(s) (9) are moved manually in the sequence necessary for this injection moulding cycle into their positions necessary for this injection moulding cycle, and actions, namely build-up of closing force, injecting, after-pressure or cooling are carried out, wherein this movement sequence of the machine parts and/or of the mould parts (3, 4, 5, 6, 7, K1, K2, K3) is stored in a control system (13), wherein both the positions and also the actions are stored.

2. The method according to Claim 1,
**characterized in that**
the programming is carried out in the set-up mode of the injection moulding machine.

3. The method according to Claim 1 or 2,
**characterized in that**
only portions of the injection moulding cycle are started, for example the movement of an ejector (6, 7, 8) and/or of core pullers (K1, K2, K3) of the injection mould (9).

4. The method according to one of Claims 1 to 3,
**characterized in that**
peripheral devices are provided, for example robots, which are incorporated into the injection moulding cycle, wherein their movement is likewise started manually, and this movement sequence is stored in the control system (13).

5. The method according to one of Claims 1 to 4,
**characterized in that**
the recorded injection moulding cycle is subsequently carried out automatically several times, and the movement of the machine parts and/or of the mould parts (3, 4, 5, 6, 7, K1, K2, K3) is optimized by input of parameters into the control system (13).

## Revendications

1. Procédé pour la programmation séquentielle d'un cycle d'injection d'une machine d'injection avec un ou plusieurs moules d'injection (9), **caractérisé en ce**
**qu'**on fait démarrer manuellement le cycle d'injection, les éléments de machine de la machine d'injection et/ou les éléments de moule (3, 4, 5, 6. 7, K1, K2, K3) du ou des moules d'injection (9) étant amenés manuellement dans la séquence requise pour ledit cycle d'injection dans leurs positions requises pour ledit cycle d'injection et des actions, à savoir la création de la force de fermeture, l'injection, le maintien en pression ou le refroidissement étant réalisées, ce processus de déplacement des éléments de machine et/ou des éléments de moule (3, 4, 5, 6. 7, K1, K2, K3) étant mémorisé dans un système de commande (13), aussi bien les positions que les actions étant mémorisées.

2. Procédé selon la revendication 1, **caractérisé en ce qu'**on procède à la programmation en mode réglage de la machine d'injection.

3. Procédé selon la revendication 1 ou 2, **caractérisé en ce qu'**on fait démarrer seulement des éléments du cycle d'injection, par exemple le déplacement d'un éjecteur (6, 7, 8) et/ou de démouleurs de noyaux (K1, K2, K3) du moule d'injection (9).

4. Procédé selon l'une quelconque des revendications 1 à 3, **caractérisé en ce qu'**il est prévu des périphériques, par exemple des robots qui son intégrés dans le cycle d'injection, leur déplacement étant également démarré manuellement et ce processus de déplacement étant mémorisé dans le système de commande (13).

5. Procédé selon l'une quelconque des revendications 1 à 4. **caractérisé en ce que** le cycle d'injection enregistré est alors ensuite réalisé automatiquement à plusieurs reprises et **en ce que** le déplacement des éléments de machine et/ou des éléments de moule (3, 4, 5. 6, 7, K1, K2, K3) est optimisé par la saisie de paramètres dans le système de commande (13).
